# NEUE EUROPÄISCHE PATENTSCHRIFT

(11) **EP 3 106 400 B2**
(45) Veröffentlichungstag und Bekanntmachung des Hinweises auf die Entscheidung über den Einspruch: **04.03.2026**
(45) Hinweis auf die Patenterteilung: 18.07.2018
(21) Anmeldenummer: 16170906.8
(22) Anmeldetag: 23.05.2016
(51) Int. Cl.: B65B 51/00

(54) **VERPACKUNGSANLAGE UND VERFAHREN ZUM VERPACKEN EINES PRODUKTS**
PACKING UNIT AND A METHOD OF PACKAGING A PRODUCT
INSTALLATION D'EMBALLAGE ET PROCÉDÉ D'EMBALLAGE D'UN PRODUIT

(30) Priorität: 15.06.2015 DE 102015210973
(43) Veröffentlichungstag der Anmeldung: 21.12.2016
(73) Patentinhaber: Windmöller & Hölscher KG, 49525 Lengerich (DE)
(72) Erfinder: Hawighorst, Thomas, 49525 Lengerich (DE); Hohenbrink, Martin, 49525 Lengerich (DE); Narberhaus, Daniel, 49525 Lengerich (DE)
(74) Vertreter: Bals & Vogel Patentanwälte PartGmbB

(56) Entgegenhaltungen:
- EP-A1- 2 746 883
- EP-A2- 2 555 066
- WO-A1-2013/018074
- WO-A1-2014/155211
- DE-A1- 102005 037 916
- DE-A1- 102008 033 549
- DE-A1- 102012 004 341
- DE-A1- 102013 216 347
- DE-B4- 10 152 765
- DE-U1- 202013 011 509

## Beschreibung

Die Erfindung betrifft eine Verpackungsanlage und ein Verfahren zum Verpacken eines Produkts in eine Mehrzahl an Säcken oder Beuteln.

In einer solchen Verpackungsanlage werden oft größere Mengen eines Produkts, welches insbesondere schütt-, riesel- oder fliesfähig ist, in transportfähige Mengen verpackt (WO 2013/018074 A1). Eine solche Verpackungsanlage ist auf einer größeren Fläche aufgestellt, so dass der Bediener nur schwierig die komplette Anlage stets im Blick haben kann. Insbesondere Alarme können übersehen werden. Auch die Bedienung der kompletten Anlage ist aufgrund der räumlichen Entfernungen zeitraubend und damit schwierig.

Die Aufgabe der vorliegenden Erfindung ist es daher, eine Verpackungsanlage und ein Verfahren zum Verpacken eines Produkts in eine Mehrzahl an Säcken oder Beuteln derart weiterzubilden, dass sie einfacher überblickt werden kann.

Die Aufgabe wird durch die Merkmale der Ansprüche 1 und 8 gelöst. In den angegebenen Unteransprüchen sind weitere Ausgestaltungen der erfindungsgemäßen Verpackungsanlage angeben, wobei die Merkmale, die im Zusammenhang mit der erfindungsgemäßen Verpackungsanlage angegeben sind, auch in Verbindung mit dem erfindungsgemäßen Verfahren gebracht werden können und umgekehrt, so dass stets wechselseitig auf die jeweiligen Merkmale zurückgegriffen werden kann bzw. wird.

Gemäß der Erfindung umfasst die Verpackungsanlage eine Absackvorrichtung, in welcher das Produkt, welches oft in einem Silo vorgehalten wird, in einzelne Säcke oder Beutel abgesackt wird. Solche Vorrichtungen werden Form-, Füll- und Schließmaschinen genannt, da aus schlauchförmigem Material einzelne, oben offene Säcke erzeugt werden, die in der Vorrichtung zusätzlich auch mit dem Produkt befüllt und am oberen, offenen Ende verschlossen werden.

Erfindungsgemäß umfasst die Verpackungsanlage eine Vorrichtung zum Palettieren einer Mehrzahl von mit dem Produkt befüllten Säcken oder Beuteln, wobei mehrere, in der Regel nacheinander zugeführte Säcke zu einer Lage zusammengefasst und angeordnet werden. Mehrere solcher Lagen werden sukzessive auf einer Palette aufgeschichtet, bis eine gewünschte Höhe erreicht ist.

Eine erfindungsgemäße Verpackungsanlage umfasst darüber hinaus wenigstens auch eine Ladungssicherungsvorrichtung zum Sichern von mit Säcken beladenen Paletten (Palettensicherungsvorrichtung), wobei in der Regel die mit Säcken beladene Palette mit einem Kunststofffolienüberzug (Stretchhaube) versehen wird oder mit einer Folie, insbesondere einer Stretchfolie, eingewickelt wird. Eine derart gesicherte Palette ist nun in der Regel transportfähig.

Die Erfindung umfasst nun wenigstens die Kombination dieser Vorrichtungen. Gemäß der vorliegenden Erfindung ist eine Einrichtung zum Bereitstellen von Informationen zu der Vorrichtung, der Verpackung und/oder zu dem Produkt vorgesehen, wobei die Informationen mit einem Endgerät außerhalb der Vorrichtung darstellbar sind. Auf diese Weise ist es dem Bediener möglich, Informationen auch an einem Standort, von welchem die Verpackungsanlage nicht oder nicht gut einsehbar ist, zu erhalten und dargestellt zu bekommen.

Damit kann es dem Bediener ermöglicht sein, die einzelnen Vorrichtungen beispielsweise stets zu überwachen und gegebenenfalls frühzeitig Entscheidungen zu treffen, etwa wenn ein Alarm auftritt. Weiterhin ist vorgesehen, dass die Einrichtung zum Bereitstellen von Informationen einen Datenprovider umfasst, mit welchem die Informationen sammelbar, bereitstellbar und/oder umformatierbar sind. Dabei können die Informationen aus wenigstens einer der Vorrichtungen, insbesondere aber aus allen Vorrichtungen stammen. Im letzteren Fall können die Informationen, insbesondere Informationen über jede Vorrichtung selbst und/oder Informationen zu Ereignissen in jeder Vorrichtung, gemeinsam bereitstellbar sein und in einem gleichen Datenformat vorliegen. Die Informationen können dabei aus einzelnen oder aus einem gemeinsamen Datenspeicher stammen. Alle diese Informationen können von dem Datenprovider gesammelt und dem Endgerät übertragen werden. Insbesondere können damit mit einem Endgerät Informationen über die gesamte Verpackungsanlage dargestellt werden.

In einer weiteren Ausgestaltung der Erfindung ist vorgesehen, dass die Einrichtung zum Bereitstellen von Informationen eine Einrichtung zum drahtlosen Übermitteln dieser Informationen umfasst. Damit können die Informationen auf besonders einfache Weise an das Endgerät übermittelbar sein.

Vorteilhaft ist es dabei, wenn die Einrichtung zum drahtlosen Übermitteln dieser Informationen wenigstens einen WLAN AccessPoint, einen Bluetooth-Sender, einen 3G-Sender, einen LTE-Sender und/oder einen DECT-Sender umfasst. Zum drahtlosen Übermitteln wird dabei auf bekannte Standards zurückgegriffen, was den Programmieraufwand für eine solche Übermittlungseinrichtung minimiert und diese gleichzeitig sehr zuverlässig macht.

Zur Darstellung der Informationen ist als Endgerät ein mobiles Endgerät bevorzugt, welches von dem Bediener ohne große Anstrengung getragen werden kann. Hierzu zählen insbesondere Smartphones, Tablets, Notebooks oder vergleichbare Geräte. Alternativ können aber auch fest installierte Endgeräte vorteilhaft sein, wie etwa ein großer Bildschirm, der im Bereich der Verpackungsanlage aufgestellt oder aufgehängt ist. In diesem Fall kann der Bediener beispielsweise mit beiden Händen eine Arbeit verrichten, wie das Durchführen von Wartungsarbeiten, ohne dass er auf das Ablesen von Informationen verzichten muss.

Um die Darstellung der Informationen möglichst einfach zu gestalten, ist vorgesehen, dass diese Informationen in Form einer Web-Seite bereitstellbar sind. Damit ist gewährleistet, dass möglichst viele unterschiedliche Endgeräte die Informationen darstellen können, ohne dass Anpassungen der Endgeräte oder des Datenproviders notwendig sind. Oft sind Webbrowser, also die Betrachter von Web-Seiten, in Endgeräten integriert, was die Darstellung der Informationen vereinfacht. Auch ist es möglich, die Informationen von einem außerhalb des Betriebes, in welchem die Verpackungsanlage installiert ist, gelegenes Endgerät darstellen zu lassen, sofern der Datenprovider die Informationen in das Internet einspeisen kann.

Insbesondere ist es vorteilhaft, wenn die Einrichtung zum Bereitstellen von Informationen dazu eingerichtet ist, diese Informationen in einem plattformunabhängigen Datenformat bereitzustellen. Damit ist ein Datenformat gemeint, das von unterschiedlicher Hardware und/oder Software darstellbar ist. Damit können die Informationen unter verschiedenen Betriebssystemen und/oder auf Endgeräten verschiedener Herstellbar darstellbar sein. Ein solches Datenformat ist das HTML-Format, insbesondere das HTML-5-Format.

Um einen Datenmissbrauch zu verhindern, ist vorgesehen, die Informationen als verschlüsselte Daten zu übermitteln.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Druckmaschine und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: schematische Darstellung einer erfindungsgemäßen Verpackungsanlage
- Fig. 2: Funktionsdarstellung eines Datenfilters einer erfindungsgemäßen Verpackungsanlage
- Fig. 3: Bildschirmdarstellung einer Vorrichtung der erfindungsgemäßen Verpackungsanlage

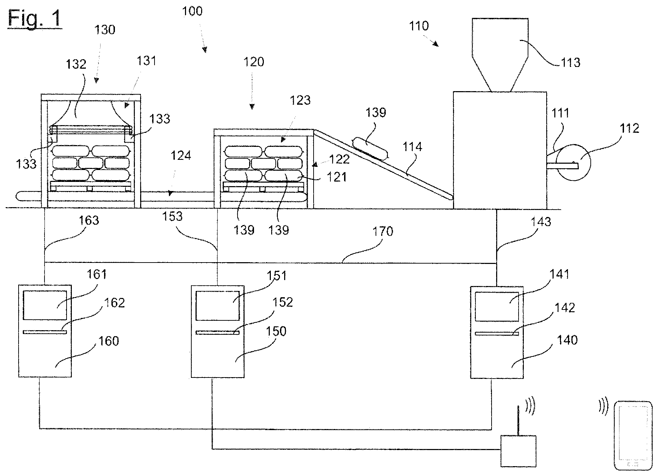

Fig. 1 zeigt eine schematische Darstellung einer erfindungsgemäßen Verpackungsanlage 100, die eine Absackanlage 110, eine Palettiervorrichtung 120 und eine Ladungssicherungsvorrichtung 130. Die Absackanlage 110 ist mit einem schlauchförmigen Verpackungsmittel 111, das auf einer Rolle 112 gespeichert ist, versorgt. Dieses Verpackungsmittel 111 wird von der Rolle 112 abgezogen. Das vordere Ende dieses Verpackungsmittels 111 wird mit einer Bodennaht versehen und nach einer Sacklänge abgetrennt, so dass ein oben offener Sack entsteht. Dieser wird an seinem oberen Ende durch Greiferpaare ergriffen und zu einer Füllstation transportiert. Dort wird das obere Ende aufgezogen, so dass das Innere des Sackes zugänglich ist. Nun kann der Sack mit dem abzusackenden Produkt, welches frei fließend ist, aber aus einem Feststoff besteht (also nicht flüssig) in der gewünschten Menge, beispielsweise 25 kg, befüllt werden. Das Produkt ist dabei in einem Silo 113 gespeichert und wird von dort abgezogen. Anschließend wird der noch offene, aber schon befüllte Sack zu einer Schließstation verbracht, wo eine den Sack verschließende Kopfnaht angebracht wird, in der Regel im Schweißverfahren.

Die befüllten Säcke 139 werden nun mit einer Transporteinrichtung 114, die mehrere Förderbänder umfassen kann, zur Palettiervorrichtung 120 transportiert. Dort werden mehrere Säcke 139 oberhalb einer Palette 121 gesammelt und angeordnet. Diese Anordnung von Säcken wird auf die Palette abgelegt und bildet dort eine Sacklage 122. In jeder Sacklage sind die Säcke in der Regel gegenüber der vorherigen Sacklage variierend angeordnet, um so die Stabilität des Sackstapels 123 zu erhöhen.

Die fertig bepackte Palette 121 wird nun über eine Fördereinrichtung 124 zur Ladungssicherungsvorrichtung 130 verbracht, wo die bepackte Palette mit einem Überzug, einer so genannten Stretchhaube 131 versehen wird. Dazu sind an jeder Ecke, aber oberhalb der bepackten Palette jeweils ein Refffinger 133 angeordnet, auf den ein Folienschlauch 132 mit einer gewissen Länge gespeichert wird. Anschließend bewegen sich die Refffinger diagonal nach außen, so dass sie sich in horizontaler Richtung gesehen außerhalb der Abmaße der Palette befinden. Dabei wird der Folienschlauch 132 gedehnt. Nun können sich die Refffinger abwärts bewegen und geben dabei sukzessive den Folienschlauch ab, so dass sich eine glatte Haube über der bepackten Palette ergibt. Vor oder während der Abwärtsbewegung der Refffinger wird der Folienschlauch 132 entsprechend der benötigten Länge abgetrennt und mit einer Schweißnaht verschlossen, so dass die Haube 131 oben geschlossen ist. Die Stretchhaube hat nicht nur die Aufgabe, die Säcke während eines Transports sicher auf der Palette zu halten, sondern kann auch dem Schutz vor Umwelteinflüssen, wie etwa vor Feuchtigkeit, dienen.

Jede der genannten Vorrichtungen 110, 120, 130 umfasst in diesem Ausführungsbeispiel erfindungsgemäss eine Bedien- und Informationseinrichtung 140, 150, 160, die jeweils Informationen zu Ereignissen in der jeweiligen Vorrichtung speichert und bereitstellt. Dazu kann die Bedien- und Informationseinrichtung eine Recheneinrichtung und wenigstens einen Massenspeicherbaustein, beispielsweise in Form eine Festplatte auf magnetischer Basis und/oder einen Solid-State-Drive (Halbleiterlaufwerk), umfassen. In diesem Speicherbaustein lassen sich nun zu verschiedenen, aber festgelegten Ereignissen Informationen speichern. Einige dieser Ereignisse, beispielsweise "Herstellung eines befüllten Sacks oder Beutels", erfolgen fortwährend, während andere Ereignisse unregelmäßig stattfinden können. Dennoch erfolgt zu all diesen Ereignissen die Speicherung der zugehörigen Informationen.

Die Bedien- und Informationseinrichtung 140, 150, 160 kann jeweils auch einen Bildschirm 141, 151, 161 umfassen, auf welchen sich Ansichten anzeigen lassen, die verschiedene der gespeicherten Informationen umfassen. Weiterhin kann eine Eingabevorrichtung 142, 152, 162 vorgesehen sein, mit welcher sich beispielsweise Befehle eingeben lassen, die zu den genannten Ansichten führen. Datenleitungen 143, 153, 163 führen von verschiedenen Bauelementen der Vorrichtungen zur Bedien- und Informationseinrichtung 140, 150, 160.

Weiterhin ist eine die Vorrichtungen und auch die Bedien- und Informationseinrichtungen vernetzende Datenleitung 170 gezeigt. Damit ist es möglich, von einer der Bedien- und Informationseinrichtungen 140, 150, 160 auf alle anderen Bedien- und Informationseinrichtungen 140, 150, 160 beziehungsweise auf die Vorrichtungen 110, 120, 130 zuzugreifen.

Von den Bedien- und Informationseinrichtungen 140, 150, 160 führen weitere Datenleitungen 180 zu einem Datenprovider 181, dessen Aufgabe es ist, die Informationen für weitere Geräte zur Verfügung zu stellen. Dazu steht der Datenprovider 181 in Datenkontakt mit den Bedien- und Informationseinrichtungen 140, 150, 160, so dass der Datenprovider die Informationen sammeln, ggf. umformatieren und zumindest einem Endgerät zur Verfügung stellen kann. Der Datenprovider 181 kann auch mit einem oder zwei der Bedien- und Informationseinrichtungen 140, 150, 160 verbunden oder in dieser integriert sein, wobei dann dieser Bedien- und Informationseinrichtung über die Datenleitung die Informationen aus den anderen Bedien- und Informationseinrichtungen übermittelbar sind.

Im vorliegenden Ausführungsbeispiel sendet der Datenprovider 181 über eine Antenne 182 die Daten drahtlos an ein Endgerät, hier ein Smartphone 183.

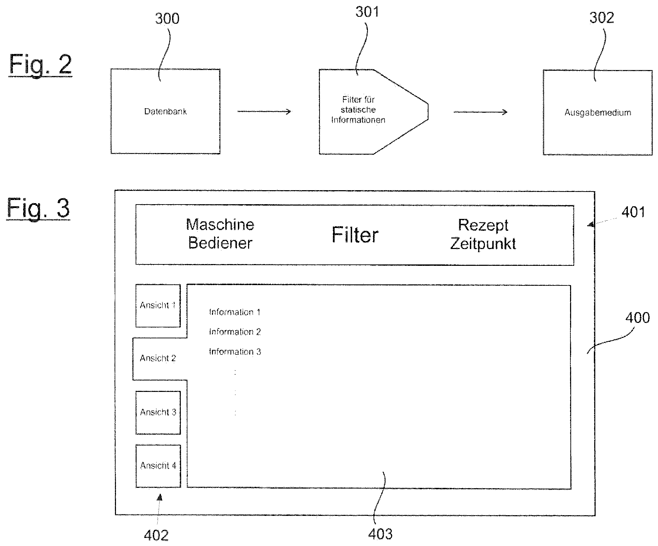

Die Figur 2 zeigt eine Funktionsdarstellung eines Datenfilters einer erfindungsgemäßen Verpackungsanlage. Dargestellt ist eine Datenbank, welche eine softwaretechnische Verknüpfung von Ereignissen und den zugehörigen Informationen bereitstellt sowie die Speicherung in den Speicherbausteinen organisiert. Zudem stellt die Datenbank die Informationen auch bei Abfragen zur Verfügung.

Bei einer speziellen Datenabfrage lassen sich nun in der dargestellten Ausführungsform Daten abfragen, wobei sich lediglich Suchkriterien bzw. Suchbereiche für die statischen Informationen zugelassen sind. So kann beispielsweise der Benutzer, das Rezept, der Zeitpunkt und die Maschine für die Datenabfrage festgelegt werden. Es kann beispielsweise nach allen Informationen gesucht werden, die zu Ereignissen gehören, die innerhalb der letzten 24 Stunden eingetreten sind. Eine entsprechende Datenabfrage in den dynamischen Informationen ist nicht vorgesehen. Die Datenabfrage ist in der Figur 3 als Filter 301 dargestellt. Die Datenabfrage ist anschließend durch ein Ausgabemedium 302, beispielsweise einem Bildschirm, dem Benutzer mitteilbar. Die genannte Datenabfrage kann auch vom Endgerät aus organisiert werden. Dazu wird vom Endgerät aus die Datenabfrage über den Datenprovider zumindest einer der Bedien- und Informationseinrichtungen übermittelt, in welche vorteilhafterweise die Informationen ermittelt werden. Diese werden dann wiederum über den Datenprovider dem Endgerät zwecks Darstellung übermittelt.

Die Figur 3 zeigt eine Ausführungsform für eine Darstellung der Ergebnisse einer Datenabfrage auf einem Bildschirm 400 einer der Bedien- und Informationssysteme oder auf einem Endgerät, das sich erfindungsgemäß außerhalb der Verpackungsanlage befindet. In einem Darstellungsbereich 401 ist der Filter dargestellt, d. h., der Schriftzug "Filter" steht für den Filternamen. Unter diesem Filternamen kann der Filter mit den entsprechenden Suchkriterien abgespeichert sein oder werden. In dem Darstellungsbereich 402 sind nun alle Ereignisse angezeigt oder alle Ereignisse angezeigt, deren statische Informationen den Suchkriterien entsprechen. Das angezeigte Ereignis ist in der Figur 4 als Ansicht 1, Ansicht 2 usw. dargestellt. Eine der Ansichten ist nun auswählbar, wobei alle statischen und/oder dynamischen Informationen zu dem ausgewählten Ereignis anzeigbar sind. Hierzu steht der Darstellungsbereich 403 zur Verfügung.

Das Ausführungsbeispiel der Figur 3 und der Figur 4 dient der einfachen Formulierung eines Filters sowie der übersichtlichen Darstellung der Suchergebnisse. Dies kann, wie beschrieben, durch eine der Bedien- und Informationseinrichtungen 140, 150, 160 für alle Vorrichtungen erfolgen. Auf diese Weise kann sich ein Bediener schnell über wichtige Dinge der Verpackungsanlage, wie beispielsweise zurückliegende Wartungsarbeiten informieren.

| **Bezugszeichenliste** | |
|---|---|
| 100 | Verpackungsanlage |
| 110 | Absackanlage |
| 111 | Verpackungsmittel |
| 112 | Rolle |
| 113 | Silo |
| 114 | Transporteinrichtung |
| 120 | Palettiervorrichtung |
| 121 | Palette |
| 122 | Sacklage |
| 123 | Sackstapel |
| 124 | Fördereinrichtung |
| 130 | Ladungssicherungsvorrichtung |
| 131 | Stretchhaube |
| 132 | Folienschlauch |
| 133 | Refffinger |
| 139 | Befüllte Säcke |
| 140, 150, 160 | Bedien- und Informationseinrichtung |
| 141, 151, 161 | Bildschirm |
| 142, 152, 162 | Eingabevorrichtung |
| 170 | Datenleitung |
| 180 | Datenleitung |
| 181 | Datenprovider |
| 182 | Antenne |
| 183 | Smartphone |
| 301 | Filter |
| 302 | Ausgabemedium |
| 400 | Bildschirm |
| 401 | Darstellungsbereich |
| 402 | Darstellungsbereich |
| 403 | Darstellungsbereich |

## Patentansprüche

1. Verpackungsanlage zum Verpacken eines Produkts mit wenigstens den folgenden Vorrichtungen:
- Absackvorrichtung (110)
- Palettiervorrichtung (120)
- Palettensicherungsvorrichtung (130),
**dadurch gekennzeichnet, dass**
eine Einrichtung zum Bereitstellen von Informationen zu der Vorrichtung, der Verpackung und/oder zu dem Produkt vorgesehen ist, wobei die Informationen mit wenigstens einem Endgerät außerhalb der Vorrichtung darstellbar sind wobei jede der Vorrichtungen eine Bedien- und Informationseinheit (140, 150, 160) umfasst, mit
welcher jeweils Informationen zu den Ereignissen in der jeweiligen Vorrichtung speicherbar und bereitstellbar sind, wobei die Einrichtung zum Bereitstellen von Informationen einen Datenprovider, mit welchem die Informationen sammelbar, bereitstellbar und/oder umformatierbar sind, umfasst,
wobei Datenleitungen (143, 153, 163) von verschiedenen Bauelementen der Vorrichtungen zur jeweiligen Bedien- und Informationseinrichtung (140, 150, 160) führen, wobei eine die Vorrichtungen (110, 120, 130) und auch die Bedien- und Informationseinrichtungen (140, 150, 160) vernetzende Datenleitung (170) vorgesehen ist,
wobei von den Bedien- und Informationseinrichtungen (140, 150, 160) weitere Datenleitungen zu dem Datenprovider führen.

2. Verpackungsanlage nach dem vorstehenden Anspruch,
**dadurch gekennzeichnet, dass**
die Einrichtung zum Bereitstellen von Informationen eine Einrichtung zum drahtlosen Übermitteln dieser Informationen umfasst.

3. Verpackungsanlage nach dem vorstehenden Anspruch,
**dadurch gekennzeichnet, dass**
die Einrichtung zum drahtlosen Übermitteln dieser Informationen wenigstens einen WLAN Access Point, einen Bluetooth-Sender, einen 3G-Sender, einen LTE-Sender und/oder einen DECT-Sender umfasst.

4. Verpackungsanlage nach einem der vorstehenden Ansprüche,
**dadurch gekennzeichnet, dass**
das Endgerät zumindest ein mobiles Endgerät ist, insbesondere ein Smartphone, ein Tablet oder ein Notebook.

5. Verpackungsanlage nach einem der vorstehenden Ansprüche,
**dadurch gekennzeichnet, dass**
mit der Einrichtung zum Bereitstellen von Informationen diese Informationen in Form einer Web-Seite bereitstellbar sind.

6. Verpackungsanlage nach einem der vorstehenden Ansprüche,
**dadurch gekennzeichnet, dass**
die Einrichtung zum Bereitstellen von Informationen dazu eingerichtet ist, diese Informationen in einem plattformunabhängigen Datenformat bereitzustellen.

7. Verpackungsanlage nach einem der vorstehenden Ansprüche,
**dadurch gekennzeichnet, dass**
mit dem Endgerät die Informationen als verschlüsselte Daten empfangbar sind.

8. Verfahren zum Verpacken eines schüttfähigen Produkts,
mit zumindest den folgenden Schritten:
- Absacken des Produkts in Säcke oder Beutel
- Palettieren mehrerer Säcke oder Beutel
- Sichern der auf der Palette aufgestapelten Säcke oder Beutel
**dadurch gekennzeichnet, dass**
mit einer Einrichtung zum Bereitstellen von Informationen zu der Vorrichtung, der Verpackung und/oder zu dem Produkt diese Informationen zur Verfügung gestellt werden, wobei die Informationen mit einem Endgerät außerhalb der Vorrichtung empfangen werden, wobei jede der Vorrichtungen eine Bedien- und Informationseinheit (140, 150,160) umfasst, welche jeweils Informationen zu den Ereignissen in der jeweiligen Vorrichtung speichert und bereitstellt, wobei die Einrichtung zum Bereitstellen von Informationen mit einem Datenprovider Informationen sammelt, bereitstellt und/oder umformatiert,
wobei Datenleitungen (143, 153, 163) von verschiedenen Bauelementen der Vorrichtungen zur jeweiligen Bedien- und Informationseinrichtung (140, 150, 160) führen, wobei eine die Vorrichtungen (110, 120, 130) und auch die Bedien- und Informationseinrichtungen (140, 150, 160) vernetzende Datenleitung (170) vorgesehen ist,
wobei von den Bedien- und Informationseinrichtungen (140, 150, 160) weitere Datenleitungen zu dem Datenprovider führen.

## Claims

1. Packaging system for packaging a product
with at least the following devices:
- bagging device (110)
- palletizer (120)
- pallet securing device (130),
**characterized in that**
a device for providing information on the device, the packaging and/or the product is provided, the information being displayable with at least one terminal device outside the device, each of the devices comprising an operating and information device (140, 150, 160), with
which in each case information on the events in the respective device can be stored and made available, wherein the device for providing information comprises a data provider with which the information can be collected, made available and/or reformatted,
wherein data lines (143, 153, 163) lead from various components of the devices to the respective operating and information device (140, 150, 160), wherein a data line (170) networking the devices (110, 120, 130) and also the operating and information devices (140, 150, 160) is provided,
whereby further data lines lead from the operating and information devices (140, 150, 160) to the data provider.

2. Packaging system according to the preceding claim,
**characterized in that**
the device for providing information comprises a device for wirelessly transmitting this information.

3. Packaging system according to the preceding claim,
**characterized in that**
the device for wirelessly transmitting this information comprises at least one WLAN access point, a Bluetooth transmitter, a 3G transmitter, an LTE transmitter and/or a DECT transmitter.

4. Packaging system according to one of the preceding claims,
**characterized in that**
the terminal device is at least a mobile terminal device, in particular a smartphone, a tablet or a notebook.

5. Packaging system according to one of the preceding claims,
**characterized in that**
with the device for providing information, this information can be made available in the form of a web page.

6. Packaging system according to one of the preceding claims,
**characterized in that**
the device for providing information is set up to provide this information in a platform-independent data format.

7. Packaging system according to one of the preceding claims,
**characterized in that**
the information can be received as encrypted data with the terminal device.

8. Method for packaging a pourable product,
with at least the following steps:
- bagging the product in sacks or bags
- palletizing multiple sacks or bags
- securing the sacks or bags stacked on the pallet
**characterized in that**
with a device for providing information about the device, the packaging and/or the product, said information being provided, said information being received with a terminal device outside the device, wherein each of the devices comprises an operating and information device (140, 150, 160) which stores and provides information about the events in the respective device, respectively, wherein the device for providing information collects, provides and/or reformats information with a data provider,
wherein data lines (143, 153, 163) lead from various components of the devices to the respective operating and information device (140, 150, 160), wherein a data line (170) networking the devices (110, 120, 130) and also the operating and information devices (140, 150, 160) is provided,
whereby at least one further data line leads from the operating and information devices (140, 150, 160) to the data provider.

## Revendications

1. Installation d'emballage pour emballer un produit
comprenant au moins les dispositifs suivants :
- dispositif d'ensachage (110)
- dispositif de palettisation (120)
- dispositif de sécurisation des palettes (130),
**caractérisé en ce qu'**
un dispositif est prévu pour mettre à disposition des informations sur le dispositif, l'emballage et/ou le produit, les informations pouvant être représentées avec au moins un terminal à l'extérieur du dispositif, chacun des dispositifs comprenant une unité de commande et d'information (140, 150, 160), qui permet respectivement de stocker et de mettre à disposition des informations sur les événements dans le dispositif respectif, le dispositif de mise à disposition d'informations comprenant un fournisseur de données avec lequel les informations peuvent être collectées, mises à disposition et/ou reformatées,
des lignes de données (143, 153, 163) menant de différents éléments de construction des dispositifs au dispositif de commande et d'information (140, 150, 160) respectif, une ligne de données (170) mettant en réseau les dispositifs (110, 120, 130) et également les dispositifs de commande et d'information (140, 150, 160) étant prévue,
d'autres lignes de données menant des dispositifs de commande et d'information (140, 150, 160) au fournisseur de données.

2. Installation d'emballage selon la revendication précédente,
**caractérisé en ce que**
le dispositif de mise à disposition d'informations comprend un dispositif de transmission sans fil de ces informations.

3. Installation d'emballage selon la revendication précédente,
**caractérisé en ce que**
le dispositif de transmission sans fil de ces informations comprend au moins un point d'accès WLAN, un émetteur Bluetooth, un émetteur 3G, un émetteur LTE et/ou un émetteur DECT.

4. Installation d'emballage selon l'une des revendications précédentes,
**caractérisé en ce que**
le terminal est au moins un terminal mobile, en particulier un smartphone, une tablette ou un ordinateur portable.

5. Installation d'emballage selon l'une des revendications précédentes,
**caractérisé en ce que**
avec le dispositif de mise à disposition d'informations, ces informations peuvent être mises à disposition sous la forme d'une page web.

6. Installation d'emballage selon l'une des revendications précédentes,
**caractérisé en ce que**
le dispositif de mise à disposition d'informations est conçu pour mettre à disposition ces informations dans un format de données indépendant de la plate-forme.

7. Installation d'emballage selon l'une des revendications précédentes,
**caractérisé en ce que**
avec le terminal, les informations peuvent être reçues sous forme de données cryptées.

8. Procédé d'emballage d'un produit en vrac,
avec au moins les étapes suivantes :
- ensachage du produit dans des sacs ou des sachets
- palettisation de plusieurs sacs ou sachets
- sécuriser les sacs ou sachets empilés sur la palette
**caractérisé en ce que**
avec un dispositif pour fournir des informations sur le dispositif, l'emballage et/ou le produit, ces informations sont mises à disposition, les informations étant reçues avec un terminal à l'extérieur du dispositif, chacun des dispositifs comprenant une unité de commande et d'information (140, 150, 160) qui mémorise et met à disposition respectivement des informations sur les événements dans le dispositif respectif, le dispositif pour fournir des informations avec un fournisseur de données collectant, mettant à disposition et/ou reformatant des informations,
des lignes de données (143, 153, 163) menant de différents éléments de construction des dispositifs au dispositif de commande et d'information (140, 150, 160) respectif, une ligne de données (170) mettant en réseau les dispositifs (110, 120, 130) et également les dispositifs de commande et d'information (140, 150, 160) étant prévue,
au moins une autre ligne de données menant des dispositifs de commande et d'information (140, 150, 160) au fournisseur de données.
